# EUROPEAN PATENT SPECIFICATION

(11) **EP 3 387 343 B1**
(45) Date of publication and mention of the grant of the patent: **30.12.2020**
(21) Application number: 16873536.3
(22) Date of filing: 04.11.2016
(51) Int. Cl.: F25D 23/06, F16L 59/065, B29C 44/56, B29L 31/00

(54) **INSULATION COMPACTION DEVICE AND METHOD FOR FORMING AN INSULATED STRUCTURE FOR AN APPLIANCE**
ISOLATIONSVERDICHTUNGSVORRICHTUNG UND VERFAHREN ZUR AUSBILDUNG EINER ISOLIERTEN STRUKTUR FÜR EIN GERÄT
DISPOSITIF DE COMPACTAGE D'ISOLANT ET PROCÉDÉ POUR FORMER UNE STRUCTURE ISOLÉE POUR UN APPAREIL

(30) Priority: 08.12.2015 US 201514961956
(43) Date of publication of application: 17.10.2018
(73) Proprietor: Whirlpool Corporation, Benton Harbor, MI 49022 (US)
(72) Inventor: DHERDE, Eric J., Benton Harbor Michigan 49022 (US); WESTLAKE, Lorraine J., Benton Harbor Michigan 49022 (US)
(74) Representative: Spina, Alessandro
(86) International application number: PCT/US2016/060519
(87) International publication number: WO 2017/099912

(56) References cited:
- EP-A1- 0 645 576
- WO-A1-99/20964
- DE-A1-102010 040 346
- RU-C1- 2 077 411
- US-A- 6 063 471

## Description

### BACKGROUND

The device is in the field of insulating structures for appliances, specifically, an insulating structure for an appliance having a compacted insulating material within the insulating structure. EP 645576 A1 discloses a device according to the preamble of attached claim 1.

### SUMMARY

An insulation compaction device for installing an insulating media within an insulating structure of an appliance according to appended claim 1.

A method for forming an insulative member according to appended claim 9.

These and other features, advantages, and objects of the present device will be further understood and appreciated by those skilled in the art upon studying the following specification, claims, and appended drawings.

### BRIEF DESCRIPTION OF THE DRAWINGS

In the drawings:
FIG. 1 is a front perspective view of an appliance incorporating an aspect of the compacted insulated structure;
FIG. 2 is a perspective view of an exemplary insulation compaction device incorporating positive and negative compressive forces;
FIG. 3 is a side perspective view of the insulation compaction device of FIG. 2 looking into the internal cavity of the piston chamber;
FIG. 4 is a cross-sectional view of the insulation compaction device of FIG. 2 taken along line IV-IV;
FIG. 5 is a cross-sectional view of an aspect of the insulation compaction device showing the gas valve operating in a passive state;
FIG. 6 is a cross-sectional view of the insulation compaction device of FIG. 5 showing the gas valve operating in an active state;
FIG. 7 is a cross-sectional view of the insulation compaction device of FIG. 5 showing simultaneous operation of the piston and the gas valve;
FIG. 8 is a top perspective view of an exemplary insulating structure for an appliance incorporating an aspect of the insulation compaction device;
FIG. 9 is a cross-sectional view of the insulation compaction device of FIG. 8 taken along line IX-IX;
FIG. 10 is a schematic flow diagram illustrating an exemplary method for forming an insulative member; and
FIG. 11 is a schematic flow diagram illustrating an exemplary method for forming an appliance cabinet utilizing aspects of the insulation compaction device.

### DETAILED DESCRIPTION OF EMBODIMENTS

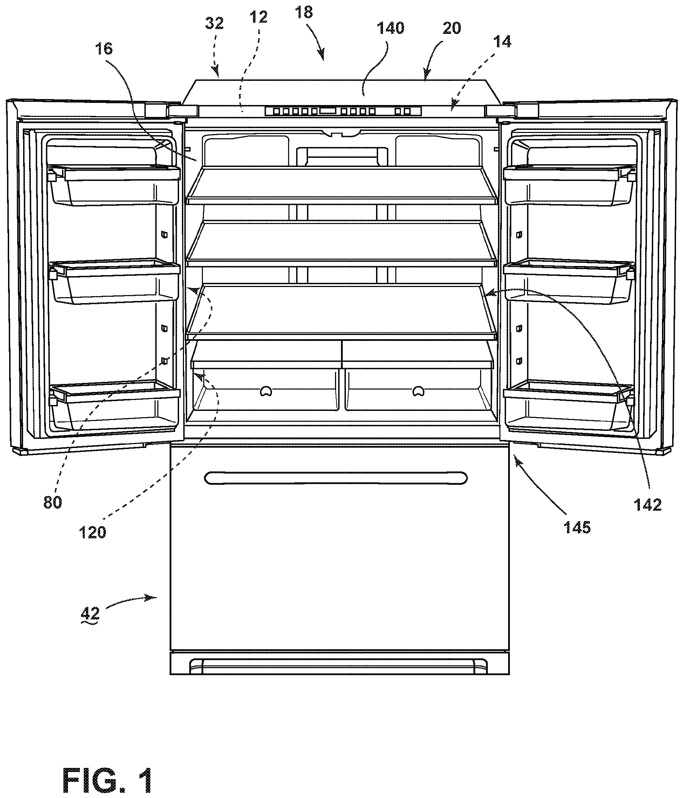

For purposes of description herein the terms "upper," "lower," "right," "left," "rear," "front," "vertical," "horizontal," and derivatives thereof shall relate to the device as oriented in FIG. 1.

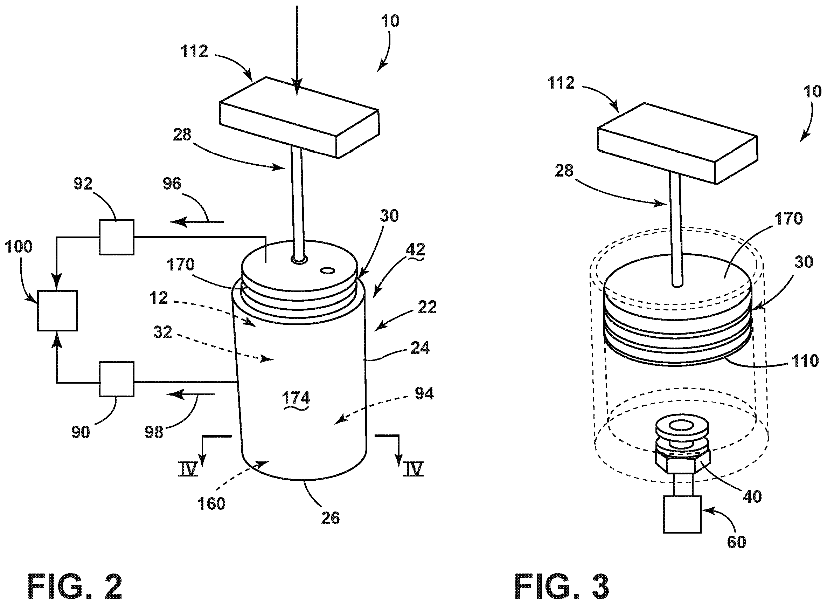

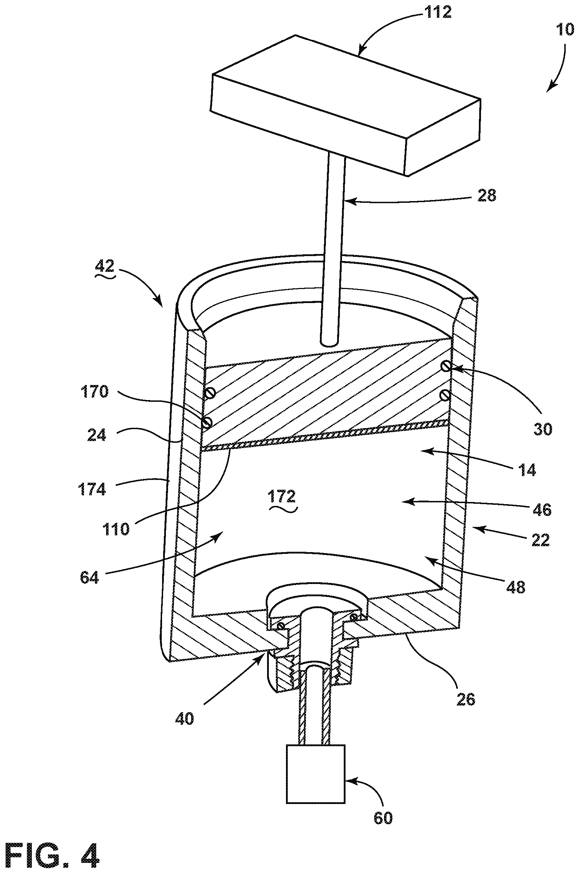

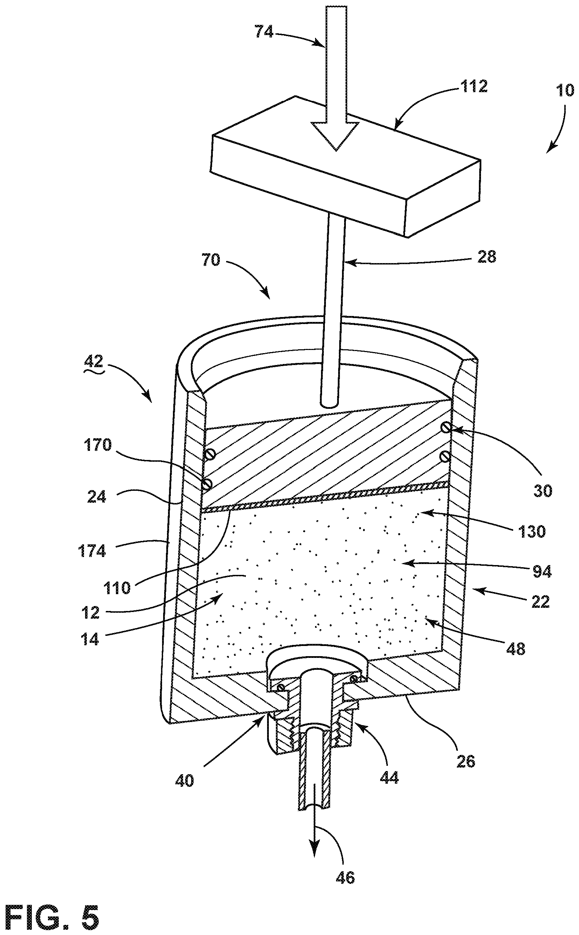

As illustrated in FIGS. 1-7, an insulation compaction device 10 can be used to increase the density of an insulating media 12 or insulating material for installation within an insulating internal cavity 14 of an appliance 18, such as that typically formed within the walls 16 of the appliance 18. Such appliances 18 can include, but are not limited to, refrigerators, freezers, dishwashers, ovens, laundry appliances, water heaters, HVAC systems, and other similar household appliances. FIGS. 2-7 exemplify various aspects of the insulation compaction device 10 for purposes of illustrating exemplary operational modes and methods of operation for aspects of the insulation compaction device 10. The insulation compaction device 10 is configured to prepare and/or dispose insulating media 12 within an insulating structure 20 of an appliance 18. The insulation compaction device 10 includes a piston chamber 22 having a sidewall 24 and a base 26 that defines an internal cavity 14 of the piston chamber 22. An operable piston 28 selectively engages the sidewall 24 wherein engagement between the operable piston 28 and the sidewall 24 defines a hermetic seal 30 between the operable piston 28 and the piston chamber 22. It is contemplated that the operable piston 28 is operable to define a selected chamber volume 32 of the internal cavity 14 defined between the operable piston 28 and piston chamber 22. The selected chamber volume 32 can be defined by one or more of various design, performance, and/or dimensional parameters of the insulating structure 20 for the appliance 18.

Referring again to aspects of the device as exemplified in FIGS. 2-7, a valve 40 is positioned proximate the base 26 of the piston chamber 22, where the valve 40 defines selective communication between the internal cavity 14 and the exterior 42 of the piston chamber 22. The valve 40 is selectively operable in a passive state 44 to release gas 46 disposed within the piston chamber 22 to the exterior 42. The passive state 44 of the valve 40 is defined by an equalized pressure 48 within the internal cavity 14 of the piston chamber 22 during operation of the operable piston 28 to define the selected chamber volume 32. In this manner, as the operable piston 28 moves to define the selected chamber volume 32, internal pressure within the internal cavity 14 increases due to the decrease in volume of the internal cavity 14. This increased pressure is released through the passive expression of gas 46 through the valve 40. The valve 40 is in a passive state 44 to provide for substantially equal pressure within the internal cavity 14 when compared with the exterior 42 of the piston chamber 22.

Referring again to FIGS. 2-7, a pump mechanism 60 is placed in communication with the piston chamber 22 via the valve 40 to define an active state 62 of the valve 40. Selective operation of the pump mechanism 60 places the valve 40 in the active state 62 to define a chamber pressure 64 of the internal cavity 14. The chamber pressure 64 is less than the equalized pressure 48. In this manner, operation of the pump mechanism 60, such as a gas pump, serves to create a low pressure region 66 within the internal cavity 14. This low pressure region 66 is defined by an at least partial vacuum within the internal cavity 14 of the piston chamber 22. The operable piston 28 and the pump mechanism 60 operate in a simultaneous pattern 72, such that a positive compressive force 74 of the operable piston 28 can be exerted against an insulating media 12. At the same time, a low pressure or negative compressive force 76 is exerted against the insulating media 12 by the operation of the pump mechanism 60, to remove gas 46 from the internal cavity 14 through the valve 40 in the active state 62. Operation of the operable piston 28 and the pump mechanism 60, in the simultaneous pattern 72, serves to define a selected piston chamber environment 80 defined by the selected chamber volume 32 and the chamber pressure 64.

Referring again to FIGS. 2-7, the insulation compaction device 10 can also include a pressure sensor 90 that is placed in communication with the internal cavity 14 to measure the chamber pressure 64 within the internal cavity 14. It is contemplated that the pressure sensor 90 can be located proximate the valve 40, proximate the pump mechanism 60, or at an external location while in communication with the internal cavity 14. The insulation compaction device 10 can also include a position sensor 92 in communication with the operable piston 28, and the piston chamber 22. The position sensor 92 is configured to measure the selected chamber volume 32 where movements of the operable piston 28 vary the amount of space or volume defined within the internal cavity 14. The pressure sensor 90 and the position sensor 92 can cooperate to communicate a current piston chamber environment 94 of the internal cavity 14.

According to the various embodiments, the current piston chamber environment 94 can be defined as the current volume 96 of the internal cavity 14 during operation of the operable piston 28 and also a current pressure 98 defined within the internal cavity 14 during operation of the valve 40 during the active state 62 of the valve 40 as the operable piston 28 and pump mechanism 60 operate to define the selected piston chamber environment 80. The pressure sensor 90 and position sensor 92 of the insulation compaction device 10 can communicate the pressure and position data to a processor 100, where the processor 100 calculates the current pressure 98 and the current volume 96. These calculations are combined to determine the current piston chamber environment 94. Once the current piston chamber environment 94 reaches the selected piston chamber environment 80, the operation of the operable piston 28 and the pump mechanism 60 can be interrupted such that the selected piston chamber environment 80 can be maintained within the internal cavity 14 until such time as the piston chamber 22 can be sealed. Once the piston chamber 22 is sealed, the operable piston 28 can be disengaged from the sidewall 24 and the pump mechanism 60 can be disengaged from the valve 40. In this manner, the selected piston chamber environment 80 can be maintained within the internal cavity 14 after manufacture and during use of the appliance 18.

Referring again to FIGS. 2-7, the operable piston 28 can include a back panel 110 engaged thereto. In such preferred embodiment, operation of the operable piston 28 locates the back panel 110 relative to the sidewall 24. Accordingly, the operable piston 28 moves to define the selected chamber volume 32 of the internal cavity 14 and, as a consequence, positions the back wall 16 relative to the sidewall 24. Once in the proper position to define the selected piston chamber environment 80, the sidewall 24 and back wall 16 can be engaged to one another through crimping, welding, fastening, adhesives, combinations thereof, and other attachment mechanisms to secure the back panel 110 to the sidewall 24 in order to maintain the selected piston chamber environment 80 within the internal cavity 14. In order to operate the operable piston 28 toward the position defining the selected chamber volume 32 of the internal cavity 14, the operable piston 28 can be moved by mechanical press 112, having various operational mechanisms that can include, but are not limited to, hydraulics, pneumatics, mechanical drives, screw drives, combinations thereof, and other similar operating mechanisms. The engagement between the back panel 110 and the sidewall 24 can define a sealed engagement, where the back panel 110 and sidewall 24 are attached to one another to define a hermetic seal 30.

Referring again to FIGS. 2-7, the insulating media 12 is placed within the internal cavity 14 before placing the operable piston 28 against the sidewall 24 of the piston chamber 22. It is also contemplated that a known amount of the insulating media 12 can be placed within the internal cavity 14 such that calculations based upon the selected chamber volume 32 and the chamber pressure 64 can be used to calculate a density of the one or more insulating materials that make up the insulating media 12. In this manner, the density of the insulating media 12 can be modified through operation of the operable piston 28 and the pump mechanism 60 in order to modify the density of the insulating media 12 to be substantially equal to a desired insulation density 120.

The desired insulation density 120 can be a density determined to provide a certain level of thermal and/or acoustical insulating properties to the insulating structure 20 of the appliance 18. It is further contemplated that the desired insulation density 120 can be determined during the design of the insulating structure 20 by incorporating various parameters, where such parameters can include, but are not limited to, cost of materials, production time, efficiency, performance, various dimensional parameters, combinations thereof and other similar parameters and considerations that may affect the design of a particular appliance 18 or an insulating structure 20 therefor.

After the predetermined amount of the insulating media 12 is disposed within the internal cavity 14, the movement of the operable piston 28 to the selected chamber volume 32 can define a compressed state 130 of the insulating media 12 within the selected piston chamber environment 80. It is contemplated that the density of the insulating media 12 within the selected piston chamber environment 80 of the internal cavity 14 can correspond to the desired insulation density 120.

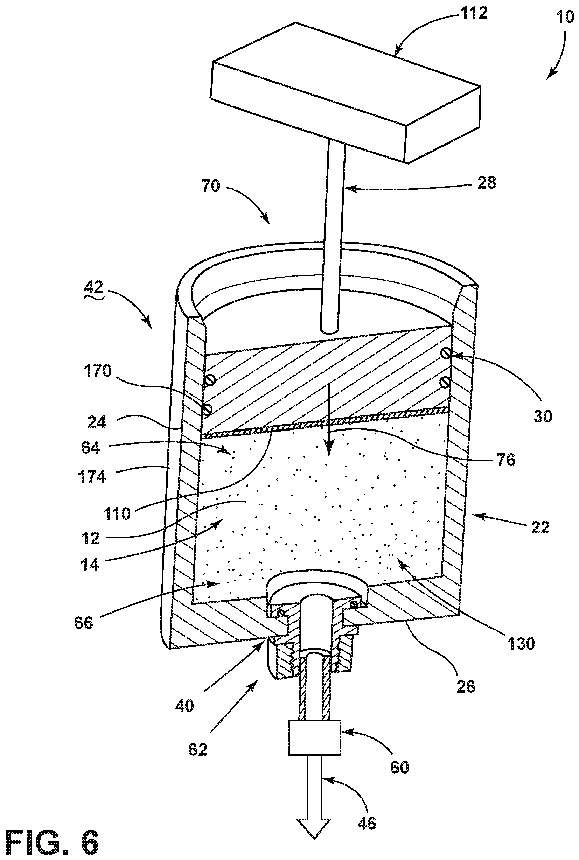

Referring now to FIG. 6, where the predetermined amount of insulating media 12 is disposed within the internal cavity 14, operation of the valve 40 in the active state 62, through operation of the pump mechanism 60, serves to define the chamber pressure 64 of the internal cavity 14, corresponding to a low pressure state of the insulating media 12. This low pressure state of the insulating media 12 is defined within the selected piston chamber environment 80 that is set through operation of the pump mechanism 60 and the valve 40 in the active state 62. As discussed above, the selected piston chamber environment 80 includes the selected chamber volume 32 and the chamber pressure 64 that corresponds to the desired insulation density 120 of the insulating media 12 disposed within the internal cavity 14. During operation of the pump mechanism 60, by itself, the pump mechanism 60 draws gas 46 from the internal cavity 14 and expels this gas 46 to areas external of the piston chamber 22. It is contemplated that the creation of the low pressure areas within the internal cavity 14 through operation of the pump mechanism 60 can cause the operable piston 28 to move downward to passively equalize the pressure between the internal cavity 14 and areas external to the piston chamber 22. It is contemplated that the operable piston 28 can be placed in a fixed position that corresponds to the selected chamber volume 32 so that operation of the pump mechanism 60 can define the low pressure region 66 within the internal cavity 14 of the piston chamber 22. In this manner, operation of the pump mechanism 60 can serve to achieve the desired insulation density 120 of the insulating media 12 within the internal cavity 14.

According to various examples not part of the claimed invention, it is contemplated that the pump mechanism 60 and valve 40 can work in conjunction with an insulating gas injection mechanism. In such an embodiment, as the pump mechanism 60 operates to draw gas 46 from the internal cavity 14 through the valve 40, a separate insulating gas injector injects an insulating gas into the internal cavity 14. In this manner, the expelled gas is replaced by an insulating gas. It is contemplated that the insulating gas can be held within the internal cavity 14 at the equalized pressure 48 or a different chamber pressure 64. It is further contemplated that the insulating gas can be any one of various insulating gasses that can include, but are not limited to, neon, carbon dioxide, xenon, krypton, combinations thereof and other similar insulating gasses.

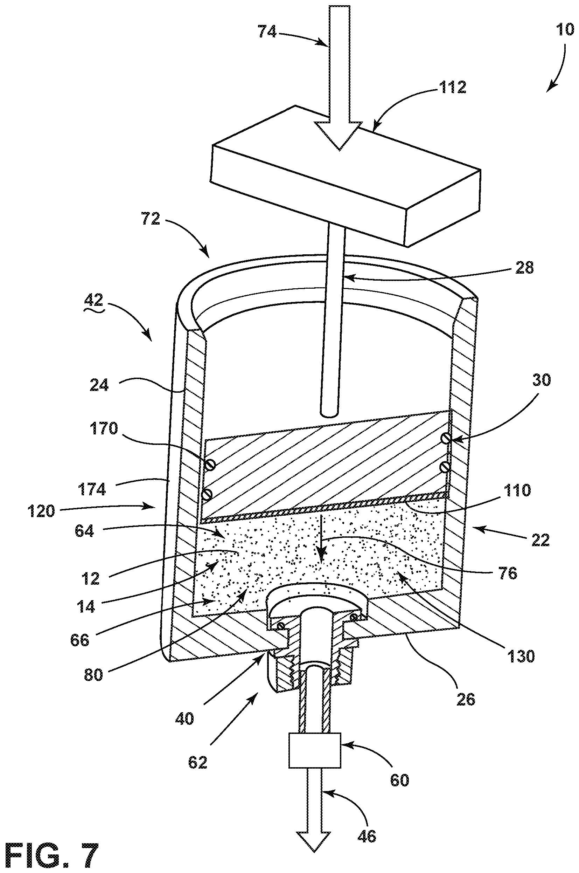

Referring now to FIG. 7, as discussed above, the operable piston 28 and the pump mechanism 60 operate in a simultaneous pattern 72 to achieve the selected piston chamber environment 80, and, in turn, the desired insulation density 120 of the insulating media 12 within the internal cavity 14. Accordingly, the operable piston 28 can be moved toward a position that defines the selected chamber volume 32 and, at the same time, the pump mechanism 60 can be activated to draw gas 46 from the internal cavity 14 to create the low pressure region 66 of the insulating media 12 within the internal cavity 14.

Additionally, simultaneous operation of the operable piston 28 and the pump mechanism 60 to achieve the desired insulation density 120 also provides an efficient mechanism for achieving a desired selected piston chamber environment 80, and in turn, the desired insulation density 120 of the insulating media 12 within the internal cavity 14.

Operation of the pump mechanism 60 removes gas 46 from the internal cavity 14. As this gas 46 is removed, the operation of the operable piston 28 can more effectively compress the insulating media 12 since there is less resistance, push back, rebound or other resistive force to oppose the positive compressive force 74 exerted by the operable piston 28. Accordingly, achievement of the selected piston chamber environment 80 and the desired insulation density 120 can be a more efficient process.

Referring again to FIG. 7, the simultaneous pattern 72 of operation for the insulation compaction device 10, as discussed above, can be defined by simultaneous operation of the operable piston 28 and the pump mechanism 60 to define the desired insulation density 120 within the internal cavity 14 of the piston chamber 22. It is contemplated that the use of the simultaneous patterns 72 of operation for the insulation compaction device 10 can be determined based upon several factors. Such factors can include, but are not limited to, the type of appliance, the size of the piston chamber 22, the thickness of the internal cavity 14, the composition of the insulating media 12, the desired insulation density 120, combinations thereof, and other similar factors.

According to the various preferred embodiments, it is contemplated that the insulating media 12 can include various compositions and combinations of materials that can be used in conjunction with the insulation compaction device 10 for achieving the desired insulation density 120 within the internal cavity 14 of the piston chamber 22. Such materials can include silica, fumed silica, rice husk, glass spheres of varying size, and other similar primary insulating components. It is also contemplated that the insulating media 12 can include various getters, dessicants, opacifiers, carbon black, and other similar insulating compositions. These various compositions can be combined in varying combinations and proportions to achieve the desired characteristics for the insulating media 12 that, when used with the insulation compaction device 10, produces the desired insulation density 120 of the insulating media 12 within the internal cavity 14.

According to the various embodiments, various configurations of the insulating media 12 can have varying reactions to the positive and negative compressive forces 74, 76 exerted thereon. Certain insulating media 12 can experience varying degrees of rebound, where the insulating media 12 expands back toward its pre-compaction density 160 after being placed in the compressed state 130. In such situations, the back panel 110 of the insulating structure 20 should be able to be sealed to the sidewall 24 while the operable piston 28 defines the selected chamber volume 32. Release of the operable piston 28 may result in the rebound of the insulating media 12, forcing the back panel 110 away from this piston such that the selected chamber volume 32 and the desired insulation density 120 may not be achieved.

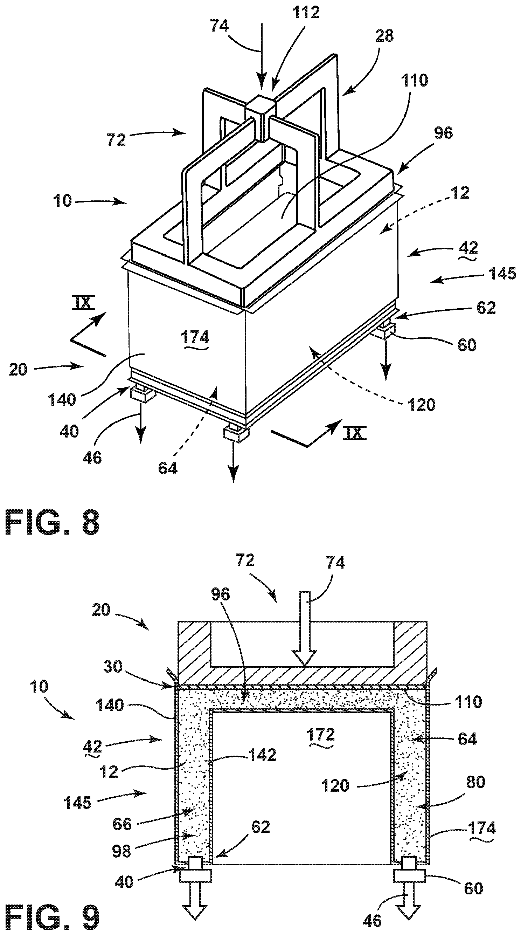

Referring now to FIGS. 8 and 9, it is contemplated that the piston chamber 22 for the insulation compaction device 10 can include an outer wrapper 140 and an inner liner 142 that define walls 16 of an insulating structure 20 for an appliance 18. The internal cavity 14 of the piston chamber 22 can be defined by the insulating internal cavity 14 within the walls 16 defined between the outer wrapper 140 and inner liner 142. It is contemplated that the embodiments exemplified in FIGS. 8 and 9 provide an aspect of the insulation compaction device 10 that incorporates the same operational aspects as those exemplified in FIGS. 2-7. In utilizing the insulation compaction device 10 within an insulating structure 20, such as a cabinet 145 for an appliance 18, the insulating media 12 can be disposed directly within the insulating internal cavity 14 defined between the outer wrapper 140 and inner liner 142 of the insulating structure 20 of the appliance 18. Accordingly, it is not necessary for an independent insulating structure 20, such as an insulating panel, to be manufactured and then later installed within the cabinet 145 of the appliance 18.

According to various embodiments, it is contemplated that the insulating media 12 can be disposed directly into the internal cavity 14 defined within the walls 16 of the insulating structure 20 and the operable piston 28, which includes the back panel 110 of the insulating structure 20, can be pressed downward to define the selected chamber volume 32 within the insulating internal cavity 14 of the walls 16 of the insulating structure 20. One or more valves 40 of the insulation compaction device 10 can be disposed within at least one of the outer wrapper 140 and inner liner 142, where the valves 40 can be connected to one or more pump mechanisms 60, to operate in the active state 62, to define the selected piston chamber environment 80 within the insulating internal cavity 14 of the insulating structure 20 of the appliance 18. Once the insulating media 12 is disposed within the insulating internal cavity 14 within the walls 16 of the insulating structure 20, the operable piston 28, having the back panel 110 of the insulating structure 20, can be disposed into engagement with the outer wrapper 140 of the insulating structure 20 to define a hermetic seal 30 between the back panel 110 and the outer wrapper 140. This hermetic seal 30 between the back panel 110 and the outer wrapper 140 allows the pump mechanism 60 to operate the valve 40 in the active state 62 to define a low pressure region 66 of an insulating media 12 within the insulating space of the insulating structure 20.

As discussed above, the operable piston 28 and the pump mechanism 60 of the insulation compaction device 10 are operated to form the insulating structure 20 through operation of the simultaneous patterns 72, and to generate the desired insulation density 120 of the insulating media 12 within the insulating internal cavity 14. Once the desired insulation density 120 is achieved, the back panel 110 can be sealed to the outer wrapper 140 to form a hermetic seal 30 between the back panel 110 and outer wrapper 140 to contain the selected piston chamber environment 80 within the internal cavity 14 and maintain the desired insulation density 120 of the insulative material within the selected piston chamber environment 80.

According to the various embodiments, it is contemplated that the use of the insulation compaction device 10 in combination with the insulating structure 20 of the appliance 18 can eliminate various steps of forming separate insulative panels or insulative components that are installed as separate pieces or a series of components within the insulating structure 20 of the appliance 18. Additionally, because the outer wrapper 140, inner liner 142, and back panel 110 can be sealed together to form a hermetic seal 30, various barrier films and internal sealing layers may not be necessary to maintain the desired insulation density 120 within the insulating internal cavity 14 of the insulating structure 20. It is contemplated that the outer wrapper 140, inner liner 142, and back panel 110 can be made of various materials that can include, but are not limited to, metal, metal alloy, polymer, composite materials, combinations thereof, and other similar materials that can create a hermetic seal 30 when bonded together to form the insulating structure 20 of the appliance 18.

According to the various embodiments, it is contemplated that the various aspects of the insulation compaction device 10 can be used to create various insulating structures 20. As discussed above, these insulating structures 20 can include a structural cabinet 145 for an appliance 18, where the insulating media 12 is directly disposed between the inner liner 142 and outer wrapper 140. It is also contemplated that the insulation compaction device 10 can be used to create smaller insulating units, such as insulating panels, that can be separately installed within a cabinet 145 of an appliance 18 to define an insulating structure 20 for the appliance 18.

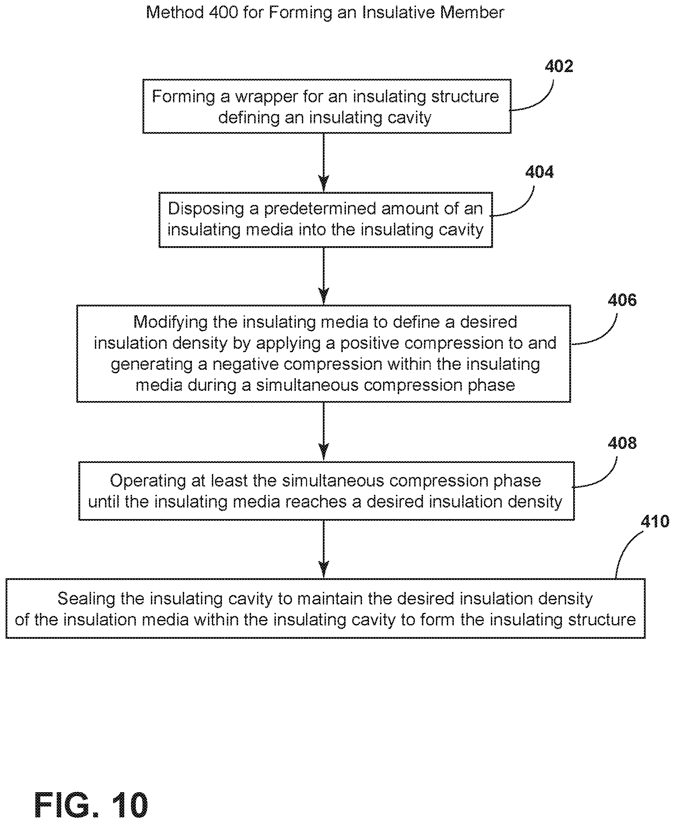

Referring now to FIGS. 2-10, having described various aspects of the insulation compaction device 10, a method 400 for an aspect of forming an insulative member is described. The method 400 includes forming an outer wrapper 140 for an insulating structure 20 (step 402). The outer wrapper 140 defines an insulating internal cavity 14 therein. After the outer wrapper 140 is formed, a predetermined amount of an insulating media 12 is disposed within the insulating internal cavity 14 (step 404). The insulating media has a pre-compaction density 160 that is defined within the insulating media 12 before any compressive forces of the operable piston 28 and the pump mechanism 60 are exerted thereon. The insulating media 12 can go through various compaction steps before being disposed within the insulating internal cavity 14 of the insulating media 12. Such compaction steps can be used to alter the physical composition of the insulating media 12 to define various particle sizes and compression strengths of the insulating media 12. Once the insulating media 12 is disposed within the insulating cavity, the insulating media 12 is modified to define a desired insulation density 120 by applying a positive compressive force 74 to and generating a negative compressive force 76 within the insulating media 12 during a simultaneous pattern 72 of compression, or a simultaneous phase (step 406). As discussed above, the positive compressive force 74 applied to the insulating media 12 can be applied through the operation of the operable piston 28 to place the downward compressive force on the insulating media 12. It is contemplated that the operable piston 28 can include at least one sealing member 170 that is configured to engage the inner surface 172, outer surface 174, or both, of the outer wrapper 140. This engagement between the sealing member 170 of the operable piston 28 and the inner and/or outer surface 174 of the wrapper defines a hermetic seal 30 formed between the operable piston 28 and the wrapper of the insulating structure 20. This sealing engagement can serve to provide for the simultaneous pattern 72 of operation described herein.

Referring again to FIGS. 2-10, the operation of the simultaneous pattern 72 of the insulation compaction device 10 takes place until the insulating media 12 reaches the desired insulation density 120 (step 408). The desired insulation density 120 is typically greater than the pre-compaction density 160, such that application of the positive compression and negative compression serves to densify the insulating media 12.

As exemplified in FIGS. 1-10, once the desired insulation density 120 is achieved, the internal cavity 14 can be sealed to maintain the desired insulation density 120 of the insulating media 12, within the internal cavity 14 to form the insulating structure 20 (step 410).

It is contemplated that the insulating structure 20 can be an appliance cabinet 145, where the insulating media 12 is disposed directly within the insulating internal cavity 14 of an appliance cabinet 145. It is also contemplated that the insulating structure 20 can be a separate insulating panel that can be installed as a unitary piece, or a series of panels, within a separate appliance cabinet 145. The use of a direct deposition of insulating material within the appliance cabinet 145 versus the installation of a premanufactured insulating member may depend upon the design of the appliance 18 and the specific parameters desired for the design and operation of the appliance 18.

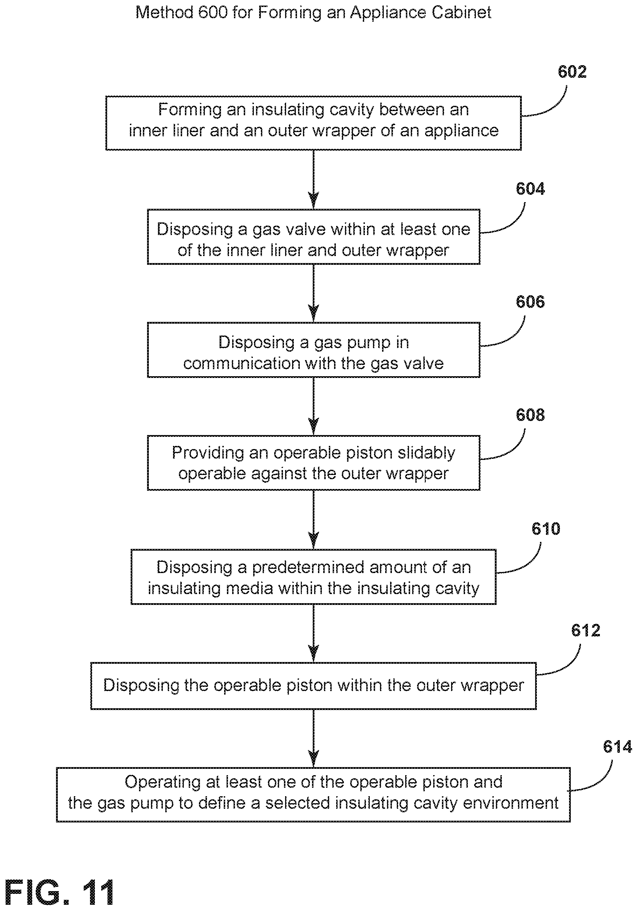

Referring now to FIGS. 2-9 and 11, a method 600 for forming an aspect of an appliance cabinet 145 is also disclosed, this method is not part of the claimed invention. Such a method 600 can include forming an internal cavity 14 between an inner liner 142 and outer wrapper 140 of an appliance 18 (step 602). As discussed above, the outer wrapper 140 and inner liner 142 can define walls 16 of an appliance cabinet 145 and the insulating internal cavity 14 can be at least partially defined between the outer wrapper 140 and inner liner 142. A gas valve can be disposed within at least one of the inner liner 142 and outer wrapper 140 (step 604). As discussed above, it is contemplated that the gas valve defines a selective communication between the insulating cavity and the exterior 42 of the appliance 18. Once the valve 40 is installed, a gas pump can be disposed in communication with the gas valve (step 606). The connection of the gas pump with the gas valve 40 can place the gas pump in communication with the insulating internal cavity 14 via the gas valve 40.

Referring again to FIGS. 2-9 and 11, an operable piston 28 can be provided, where the operable piston 28 is slidably operable against the outer wrapper 140 (step 608). Selective operation between the operable piston 28 and the outer wrapper 140 can define a hermetic seal 30. It is contemplated that the operable piston 28 can engage at least one of an inner surface 172 and an outer surface 174 of the outer wrapper 140. The engagement between the operable piston 28 and the outer wrapper 140 can depend upon the method of operation of the insulation compaction device 10. The operable piston 28 engaging the inner surface 172 of the outer wrapper 140 can serve to at least partially prevent inward deflection of the outer wrapper 140 during operation of the gas pump to define the low pressure state of the insulating media 12 within the insulating internal cavity 14. Conversely, engagement of the operable piston 28 with an outer surface 174 of the outer wrapper 140 can serve to prevent outward deflection of the outer wrapper 140 during operation of the operable piston 28. In various embodiments, it is contemplated that the operable piston 28 can engage both the inner and outer surfaces 172, 174 of the outer wrapper 140. The various engagements between the operable piston 28 and the outer wrapper 140 can also include one or more sealing members 170, disposed within the operable piston 28 or adjacent to the operable piston 28 such that when the desired insulation density 120 of the insulating media 12 is achieved, the one or more sealing members 170 can hermetically seal the internal cavity 14 while the operable piston 28 is in the desired position, to maintain the desired insulation density 120 of the insulating media 12.

Referring again to FIGS. 2-9 and 11, a predetermined amount of the insulating media 12 can be disposed within the insulating internal cavity 14 (step 610). As discussed above, the use of a predetermined amount of insulation media assists in the manufacture of the appliance cabinet 145 to achieve the desired insulation density 120 of the insulating media 12. Because the amount of insulating media 12 is known, a density of the insulating media 12 can be determined by adjusting the cavity volume and cavity pressure to place the insulating media 12 into a state that defines the desired insulation density 120. Once the predetermined amount of insulating media 12 is disposed within the insulating cavity, the operable piston 28 is disposed in engagement with the outer wrapper 140 (step 612). Once the operable piston 28 is disposed in engagement with the outer wrapper 140, at least one of the operable piston 28 and the gas pump are operated to define the selected insulating cavity environment that corresponds to the desired insulation density 120 of the insulating media 12 (step 614). As discussed above, the operable piston 28 can be operated to a predetermined location relative to the outer wrapper 140 to define the selected insulating cavity volume. The gas pump can also be operated to define a selected insulating cavity pressure, where the selected insulating cavity volume and selected insulating cavity pressure define the selected insulating cavity environment within which the insulating media 12 is maintained at the desired insulation density 120. As discussed above, the valve 40 operate in an active state 62 during operation of the gas pump in conjunction with the operable piston 28.

Referring again to FIGS. 2-9 and 11, during operation of the insulation compaction device 10, the current pressure 98 of the insulating internal cavity 14 is monitored to determine the current insulating cavity pressure (step 616). The current volume 96 of the insulating internal cavity 14 is also monitored to determine when the current volume 96 is substantially equal to the selected chamber volume 32 (step 618). As these monitoring steps (steps 616 and 618) are being conducted, the current density of the insulating media 12 is determined by comparing the predetermined amount of the insulating media 12 to the current pressure 98 and current volume 96 (step 620). Once the current density is substantially equal to the desired insulation density 120 of the insulating media 12, the gas pump and the operable piston 28 are deactivated to maintain the desired insulation density 120 (step 622).

It will be understood by one having ordinary skill in the art that construction of the described device and other components is not limited to any specific material. Other exemplary embodiments of the device disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the device as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter as defined in the appended claims. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present device as defined in the appended claims. The exemplary structures and processes disclosed herein are for illustrative purposes and are not to be construed as limiting.

It is also to be understood that variations and modifications can be made on the aforementioned structures and methods without departing from the concepts of the present device, and further it is to be understood that such concepts are intended to be covered by the following claims.

The above description is considered that of the illustrated embodiments only. Modifications of the device will occur to those skilled in the art and to those who make or use the device. Therefore, it is understood that the embodiments shown in the drawings and described above is merely for illustrative purposes and not intended to limit the scope of the device, which is defined by the following claims.

## Claims

1. An insulation compaction device (10) for installing insulation within an insulating structure (20) of an appliance (18), the insulation compaction device (10) comprising:
a positive compression mechanism which is an operable piston (28) that operates within a piston chamber (22), the piston chamber (22) having a sidewall (24) and a base (26) that define an internal cavity (14) which includes an insulating media (12);
the positive compression mechanism selectively engaging the sidewall (24) to selectively define a seal (30) between the positive compression mechanism and the piston chamber (22), wherein the positive compression mechanism is operable to define a selected chamber volume (32) of the internal cavity (14) defined between the positive compression mechanism and the piston chamber (22);
a valve (40) positioned proximate the base (26), the valve (40) defining selective communication between the internal cavity (14) and an exterior of the piston chamber (22), wherein the valve (40) is selectively operable in a passive state (44) to release gas disposed within the piston chamber (22) to the exterior, wherein the passive state (44) is defined by an equalized pressure (48) within the piston chamber (22) during operation of the positive compression mechanism to define the selected chamber volume (32); and
a pump mechanism (60) in communication with the piston chamber (22) via the valve (40) to define an active state (62) of the valve (40), wherein selective operation of the pump mechanism (60) places the valve (40) in the active state (62) to define a chamber pressure (64) of the internal cavity (14), the chamber pressure (64) being less than the equalized pressure (48) and being at least a partial vacuum, and wherein the positive compression mechanism and the pump mechanism (60) are simultaneously operated to define a selected chamber environment (80) defined by the selected chamber volume (32) and one of the equalized pressure (48) and the chamber pressure (64),
**characterized in that** operation of the valve (40) in the active state (62) in conjunction with operation of the positive compression mechanism to the chamber volume (32) defines a compressed/low pressure state of the insulating media (12) within the selected chamber environment (80) that corresponds to the desired insulation density (120).

2. The insulation compaction device (10) of claim 1, further comprising:
a pressure sensor (90) in communication with the internal cavity (14), wherein the pressure sensor (90) measures the chamber pressure (64).

3. The insulation compaction device (10) of claim 2, further comprising:
a position sensor (92) in communication with the positive compression mechanism and the piston chamber (22), wherein the position sensor (92) measures the selected chamber volume (32), wherein the pressure sensor (90) and the position sensor (92) cooperate to communicate a current piston chamber environment (94), wherein the positive compression mechanism and the valve (40) are simultaneously operated until the current piston chamber environment (94) is substantially equal to the selected chamber environment (80).

4. The insulation compaction device (10) of any one or more of claims 1-3, wherein the piston chamber (22) includes an outer wrapper (140) and an inner liner (142) defining walls (16) of an appliance (18), and wherein the internal cavity (14) defines an insulating space within the walls (16).

5. The insulation compaction device (10) of claim 4, wherein the positive compression mechanism includes a back panel (110) of the appliance (18), wherein the selected chamber volume (32) defines a position of the back panel (110) of the appliance (18) relative to the outer wrapper (140).

6. The insulation compaction device (10) of any one or more of claims 1-5, wherein the positive compression mechanism and the valve (40) are selectively operated simultaneously to define the selected chamber environment (80).

7. The insulation compaction device (10) of claim 6, wherein the insulating media (12) comprises at least one of silica, fumed silica, rice husk, insulating spheres, getters, desiccants, and opacifiers.

8. The insulation compaction device (10) of claim 1, wherein the operable piston (28) is operated by a mechanical press (112).

9. A method (400) for forming an insulative member using the insulation compaction device (10) of any one or more of claims 1-8, the method (400) comprising steps of:
forming a wrapper (140) for an insulating structure (20), the wrapper (140) defining an insulating cavity;
disposing a predetermined amount of an insulating media (12) into the insulating cavity, the insulating media (12) having a pre-compaction density (160); and
modifying the insulating media (12) to define a desired insulation density (120) by applying a positive compression to the insulating media (12) using the positive compression mechanism and generating a negative compression within the insulating media (12) using the valve (40) and the pump mechanism (60) during a simultaneous compression phase in order to create a low pressure region (66) within the internal cavity (14) defined by an at least partial vacuum within the internal cavity (14) of the piston chamber (22);
operating at least the simultaneous compression phase until the insulating media (12) reaches the desired insulation density (120), the desired insulation density (120) being greater than the pre-compaction density (160); and
sealing the insulating cavity to maintain the desired insulation density (120) of the insulation media within the insulating cavity to form the insulating structure (20).

## Patentansprüche

1. Isolierungsverdichtungsvorrichtung (10) zum Installieren von Isolierung innerhalb einer Isolierungsstruktur (20) eines Haushaltsgeräts (18), die Isolierungsverdichtungsvorrichtung (10) umfassend:
einen positiven Kompressionsmechanismus, der ein funktionsfähiger Kolben (28) ist, der innerhalb einer Kolbenkammer (22) betrieben wird, wobei die Kolbenkammer (22) eine Seitenwand (24) und ein Unterteil (26) aufweist, die einen Innenhohlraum (14) definieren, der ein Isolierungsmedium (12) beinhaltet;
wobei der positive Kompressionsmechanismus selektiv in die Seitenwand (24) eingreift, um selektiv eine Dichtung (30) zwischen dem positiven Kompressionsmechanismus und der Kolbenkammer (22) zu definieren, wobei der positive Kompressionsmechanismus funktionsfähig ist, um ein ausgewähltes Kammervolumen (32) des Innenhohlraums (14), der zwischen dem positiven Kompressionsmechanismus und der Kolbenkammer (22) definiert ist, zu definieren;
ein Absperrorgan (40), das in der Nähe des Unterteils (26) positioniert ist, wobei das Absperrorgan (40) eine selektive Kommunikation zwischen dem Innenhohlraum (14) und einer Außenseite der Kolbenkammer (22) definiert, wobei das Absperrorgan (40) selektiv in einem passiven Zustand (44) funktionsfähig ist, um ein Gas, das innerhalb der Kolbenkammer (22) angeordnet ist, an die Außenseite freizugeben, wobei der passive Zustand (44) durch einen ausgeglichenen Druck (48) innerhalb der Kolbenkammer (22) während dem Betrieb des positiven Kompressionsmechanismus definiert ist, um das ausgewählte Kammervolumen (32) zu definieren; und
einen Pumpmechanismus (60), der in Kommunikation mit der Kolbenkammer (22) über das Absperrorgan (40) steht, um einen aktiven Zustand (62) des Absperrorgans (40) zu definieren, wobei der selektive Betrieb des Pumpmechanismus (60) das Absperrorgan (40) in den aktiven Zustand (62) versetzt, um einen Kammerdruck (64) des Innenhohlraums (14) zu definieren, wobei der Kammerdruck (64) geringer als der ausgeglichene Druck (48) und mindestens ein Unterdruck ist,
und wobei der positive Kompressionsmechanismus und der Pumpmechanismus (60) gleichzeitig betrieben werden, um eine ausgewählte Kammerumgebung (80) zu definieren, die durch das ausgewählte Kammervolumen (32) und einen von dem ausgeglichenen Druck (48) und dem Kammerdruck (64) definiert ist, **dadurch gekennzeichnet, dass** der Betrieb des Absperrorgans (40) in dem aktiven Zustand (62) in Zusammenhang mit dem Betrieb des positiven Kompressionsmechanismus an dem Kammervolumen (32) einen komprimierten/Unterdruck-Zustand des Isolierungsmediums (12) innerhalb der ausgewählten Kammerumgebung (80) definiert, welcher der gewünschten Isolierungsdichte (120) entspricht.

2. Isolierungsverdichtungsvorrichtung (10) nach Anspruch 1, weiter umfassend:
einen Drucksensor (90), der in Kommunikation mit dem Innenhohlraum (14) steht, wobei der Drucksensor (90) den Kammerdruck (64) misst.

3. Isolierungsverdichtungsvorrichtung (10) nach Anspruch 2, weiter umfassend:
einen Positionssensor (92), der in Kommunikation mit dem positiven Kompressionsmechanismus und der Kolbenkammer (22) steht, wobei der Positionssensor (92) das ausgewählte Kammervolumen (32) misst, wobei der Drucksensor (90) und der Positionssensor (92) miteinander kooperieren, um eine aktuelle Kolbenkammerumgebung (94) zu kommunizieren, wobei der positive Kompressionsmechanismus und das Absperrorgan (40) gleichzeitig betrieben werden, bis die aktuelle Kolbenkammerumgebung (94) im Wesentlichen der ausgewählten Kammerumgebung (80) gleichwertig ist.

4. Isolierungsverdichtungsvorrichtung (10) nach einem oder mehreren der Ansprüche 1-3, wobei die Kolbenkammer (22) eine Außenhülle (140) und ein Innenfutter (142) beinhaltet, welche Wände (16) eines Haushaltsgeräts (18) definieren, und wobei der Innenhohlraum (14) einen Isolierungsraum innerhalb der Wände (16) definiert.

5. Isolierungsverdichtungsvorrichtung (10) nach Anspruch 4, wobei der positive Kompressionsmechanismus eine Rückenplatte (110) des Haushaltsgeräts (18) beinhaltet, wobei das ausgewählte Kammervolumen (32) eine Position der Rückenplatte (110) des Haushaltsgeräts (18) relativ der Außenhülle (140) definiert.

6. Isolierungsverdichtungsvorrichtung (10) nach einem oder mehreren der Ansprüche 1-5, wobei der positive Kompressionsmechanismus und das Absperrorgan (40) selektiv gleichzeitig betrieben werden, um die ausgewählte Kammerumgebung (80) zu definieren.

7. Isolierungsverdichtungsvorrichtung (10) nach Anspruch 6, wobei das Isolierungsmedium (12) mindestens eines von Kieselsäure, pyrogener Kieselsäure, Reisspreu, Isolierungskügelchen, Fangstoffen, Trocknungsmitteln und Trübungsmitteln umfasst.

8. Isolierungsverdichtungsvorrichtung (10) nach Anspruch 1, wobei der funktionsfähige Kolben (28) durch eine mechanische Presse (112) betrieben wird.

9. Verfahren (400) zum Bilden eines isolierenden Elements unter Verwendung der Isolierungsverdichtungsvorrichtung (10) nach einem oder mehreren der Ansprüche 1-8, wobei das Verfahren (400) folgende Schritte umfasst:
Bilden einer Hülle (140) für eine Isolierungsstruktur (20), wobei die Hülle (140) einen Isolierungshohlraum definiert;
Anordnen einer vorbestimmten Menge eines Isolierungsmediums (12) in den Isolierungshohlraum, wobei das Isolierungsmedium (12) eine Vorverdichtungsdichte (160) aufweist; und
Modifizieren des Isolierungsmediums (12), um eine gewünschte Isolierungsdichte (120) durch Anwenden einer positiven Kompression auf das Isolierungsmedium (12) unter Verwendung des positiven Kompressionsmechanismus und Generieren einer negativen Kompression innerhalb des Isolierungsmediums (12) unter Verwendung des Absperrorgans (40) und des Pumpmechanismus (60) während einer gleichzeitigen Kompressionsphase zu definieren, um eine Unterdruckregion (66) innerhalb des Innenhohlraums (14), der durch mindestens einen Unterdruck innerhalb des Innenhohlraums (14) der Kolbenkammer (22) definiert ist, zu erzeugen;
Betreiben mindestens der gleichzeitigen Kompressionsphase, bis das Isolierungsmedium (12) die gewünschte Isolierungsdichte (120) erreicht hat, wobei die gewünschte Isolierungsdichte (120) größer als die Vorverdichtungsdichte (160) ist; und
Abdichten des Isolierungshohlraums, um die gewünschte Isolierungsdichte (120) des Isolierungsmediums innerhalb des Isolierungshohlraums aufrechtzuerhalten, um die Isolierungsstruktur (20) zu bilden.

## Revendications

1. Dispositif de compactage d'isolant (10) pour installer un isolant à l'intérieur d'une structure isolante (20) d'un appareil (18), le dispositif de compactage d'isolant (10) comprenant :
un mécanisme de compression positive qui est un piston pouvant être mis en œuvre (28) qui fonctionne à l'intérieur d'une chambre de piston (22), la chambre de piston (22) ayant une paroi latérale (24) et une base (26) qui définit une cavité interne (14) qui inclut des milieux isolants (12) ;
le mécanisme de compression positive mettant en prise de manière sélective la paroi latérale (24) pour définir de manière sélective un joint (30) entre le mécanisme de compression positive et la chambre de piston (22), dans lequel
le mécanisme de compression positive peut être mis en œuvre pour définir un volume de chambre sélectionné (32) de la cavité interne (14) définie entre le mécanisme de compression positive et la chambre de piston (22) ;
une soupape (40) positionnée à proximité de la base (26), la soupape (40) définissant une communication sélective entre la cavité interne (14) et un extérieur de la chambre de piston (22), dans lequel
la soupape (40) peut être mise en œuvre de manière sélective dans un état passif (44) pour libérer le gaz disposé à l'intérieur de la chambre de piston (22) vers l'extérieur, dans lequel l'état passif (44) est défini par une pression égalisée (48) à l'intérieur de la chambre de piston (22) pendant la mise en œuvre du mécanisme de compression positive pour définir le volume de chambre sélectionné (32) ; et
un mécanisme de pompe (60) en communication avec la chambre de piston (22) via la soupape (40) pour définir un état actif (62) de la soupape (40), dans lequel une mise en œuvre sélective du mécanisme de pompe (60) place la soupape (40) dans l'état actif (62) pour définir une pression de chambre (64) de la cavité interne (14), la pression de chambre (64) étant inférieure à la pression égalisée (48) et étant au moins un vide partiel,
et dans lequel le mécanisme de compression positive et le mécanisme de pompe (60) sont mis en œuvre simultanément pour définir un environnement de chambre sélectionné (80) défini par le volume de chambre sélectionné (32) et l'une de la pression égalisée (48) et de la pression de chambre (64),
**caractérisé en ce que** la mise en œuvre de la soupape (40) dans l'état actif (62) en relation avec la mise en œuvre du mécanisme de compression positive sur le volume de chambre (32) définit un état de pression comprimé/bas des milieux isolants (12) à l'intérieur de l'environnement de chambre sélectionné (80) qui correspond à la densité d'isolant souhaitée (120).

2. Dispositif de compactage d'isolant (10) selon la revendication 1, comprenant en outre :
un capteur de pression (90) en communication avec la cavité interne (14), dans lequel le capteur de pression (90) mesure la pression de chambre (64).

3. Dispositif de compactage d'isolant (10) selon la revendication 2, comprenant en outre :
un capteur de position (92) en communication avec le mécanisme de compression positive et la chambre de piston (22), dans lequel le capteur de position (92) mesure le volume de chambre sélectionné (32), dans lequel le capteur de pression (90) et le capteur de position (92) coopèrent pour communiquer un environnement de chambre de piston courant (94), dans lequel le mécanisme de compression positive et la vanne (40) sont mis en œuvre simultanément jusqu'à ce que l'environnement de chambre de piston courant (94) soit sensiblement égal à l'environnement de chambre sélectionné (80).

4. Dispositif de compactage d'isolant (10) selon une ou plusieurs des revendications 1 à 3, dans lequel la chambre de piston (22) inclut un emballage extérieur (140) et une doublure intérieure (142) définissant des parois (16) d'un appareil (18), et dans lequel la cavité interne (14) définit un espace d'isolation à l'intérieur des parois (16).

5. Dispositif de compactage d'isolant (10) selon la revendication 4, dans lequel le mécanisme de compression positive inclut un panneau arrière (110) de l'appareil (18), dans lequel le volume de chambre sélectionné (32) définit une position du panneau arrière (110) de l'appareil (18) par rapport à l'emballage extérieur (140).

6. Dispositif de compactage d'isolant (10) selon une ou plusieurs des revendications 1 à 5, dans lequel le mécanisme de compression positive et la soupape (40) sont mis en œuvre simultanément de manière sélective pour définir l'environnement de chambre sélectionné (80).

7. Dispositif de compactage d'isolant (10) selon la revendication 6, dans lequel les milieux isolants (12) comprennent au moins l'un de silice, de silice pyrogénée, de cosse de riz, de billes isolantes, de sorbeurs, de dessiccatifs et d'opacifiants.

8. Dispositif de compactage d'isolant (10) selon la revendication 1, dans lequel le piston pouvant être mis en œuvre (28) est mis en œuvre par une presse mécanique (112).

9. Procédé (400) pour former un élément isolant en utilisant le dispositif de compactage d'isolant (10) selon une ou plusieurs des revendications 1 à 8, le procédé (400) comprenant les étapes consistant à :
former un emballage (140) pour une structure isolante (20), l'emballage (140) définissant une cavité isolante ;
disposer une quantité prédéterminée de milieux isolants (12) jusque dans la cavité isolante, les milieux isolants (12) ayant une densité de précompactage (160) ; et
modifier les milieux isolants (12) pour définir une densité d'isolation souhaitée (120) en appliquant une compression positive aux milieux isolants (12) en utilisant le mécanisme de compression positive et en produisant une compression négative dans les milieux isolants (12) en utilisant la soupape (40) et le mécanisme de pompe (60) pendant une phase de compression simultanée afin de créer une région de pression basse (66) à l'intérieur de la cavité interne (14) définie par un vide au moins partiel à l'intérieur de la cavité interne (14) de la chambre de piston (22) ;
mettre en œuvre au moins la phase de compression simultanée jusqu'à ce que les milieux isolants (12) atteignent la densité d'isolation souhaitée (120), la densité d'isolation souhaitée (120) étant supérieure à la densité de précompactage (160) ; et
sceller la cavité isolante pour maintenir la densité d'isolation souhaitée (120) des milieux isolants à l'intérieur de la cavité isolante pour former la structure isolante (20).
